(19) Europäisches Patentamt / European Patent Office / Office européen des brevets

(11) **EP 4 439 202 B1**

(12) **EUROPEAN PATENT SPECIFICATION**

(45) Date of publication and mention
of the grant of the patent:
**03.09.2025 Bulletin 2025/36**

(21) Application number: **23165167.0**

(22) Date of filing: **29.03.2023**

(51) International Patent Classification (IPC):
*G05B 15/02* *(2006.01)*

(52) Cooperative Patent Classification (CPC):
**G05B 15/02;** G05B 2219/2614; G05B 2219/2642

(54) **FAULT DETECTION IN BUILDINGS**

FEHLERERKENNUNG IN GEBÄUDEN

DÉTECTION DE DÉFAUT DANS DES BÂTIMENTS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.10.2024 Bulletin 2024/40**

(73) Proprietor: **Siemens Schweiz AG
8047 Zürich (CH)**

(72) Inventor: **Brand, Ivo
6403 Küssnacht (CH)**

(74) Representative: **Siemens Patent Attorneys
Postfach 22 16 34
80506 München (DE)**

(56) References cited:
**US-A1- 2012 041 663    US-A1- 2017 017 222**

**Description**

The present disclosure relates to detecting faults in a residential and/or commercial and/or industrial building and/or in a facility. More specifically, the present disclosure focuses on a building and/or on a facility having a plurality of actuators and a plurality of sensors. To find faults within the building and/or within the facility, the signals obtained from the sensors are analysed. Those signals can also be analysed together with positions of the actuators of the building.

Residential and/or commercial and/or industrial buildings commonly have a plurality of actuators such as valves and/or damper actuators and/or pumps. They control the heating and/or ventilation and/or air conditioning within the buildings. These buildings may also include actuators to set the positions of blinds. Actuators can also be intended to switch and/or dim lights.

In addition to these actuators, sensors such as light sensors and/or temperature sensors and/or sensors for measuring particulate matter and/or presence detectors can be provided. The sensors and the actuators are distributed throughout the various parts of a structure. They typically come with a communication interface and/or with a communication controller to communicate with one another and/or with one or more system controllers. The one or more system controllers can be installed on-site. The one or more system controllers can also comprise a remote controller. The one or more system controllers can, by way of non-limiting example, comprise a cloud computer.

The communication interface and/or the communication controller can, for instance, rely on wireless solutions such as WLAN and/or KNX® RF and/or Enocean®. Hard-wired solutions such as Ethernet® cables and/or KNX® cables are also common. The choice of any wireless or hard-wired solution is influenced by bandwidth requirements. Sensor and/or actuators with video streaming functionality can, for instance, require more bandwidth than other types of field devices.

The sensors and the actuators thus form a network. Ideally, each device of the network can be identified through an address such as a media access control (MAC) address or an internet protocol (IP) address. One or more system controllers may, for instance, rely on direct host configuration and assign addresses to the actuators and/or to the sensors. The one or more system controllers and the actuators and/or the sensors then use these addresses and suitable protocols for communication purposes.

Upon completion of an installation of various actuators and/or sensors in a building and/or in a facility, these devices require commissioning and/or tests. That is, someone searches the various parts of a building for all the actuators and/or sensors. The commissioning personnel then record their identifications and their locations. The commissioning personnel can, for instance, create a table with device addresses and with device locations.

This known process of commissioning and/or testing has a number of shortcomings. The commissioning and/or test personnel searching for devices can, by way of example, miss one of the actuators and/or miss one of the sensors. The personnel can spend long hours searching for devices that are not obvious to find. Further, the personnel can make a mistake in writing down an address of an actuator or of a sensor. All those issues typically involve cost penalties and/or delays.

A European patent application EP3156858A1 was filed by SIEMENS SCHWEIZ AG on 16 October 2015. The application EP3156858A1 has by 4 July 2018 led to a granted patent EP3156858B1. The patent EP3156858B1 deals with commissioning of sensors and actuators in buildings. More specifically, pairs of sensors and actuators are identified based on correlation coefficients. The correlation coefficients are calculated based on the settings and on the readings obtained from the actuators and from the sensors, respectively.

More than a hundred pumps and/or valves and/or heat meters are installed in some buildings. Tests of such buildings then turn into arduous and time-consuming exercises. Due to complexity, the odds of making mistakes during the test of such buildings are high.

A patent application US2017/017222A1 was filed by General Electric Company (Schenectady, NY) on 17 July 2015. The application was published on 19 January 2017. US2017/017222A1 deals with systems and methods for implementing control logic.

A patent application US2012/04663A1 was filed by ARTHROSURFACE INC and by EK STEVEN W and by TALLARIDA STEVEN J on 28 December 2010. The application was published on 5 January 2012. A priority date of 1 May 2000 is claimed. US2012/04663A1 deals with system and a method for joint resurface repair.

The present disclosure improves on the commissioning and testing of commercial and/or industrial and/or residential structures. The instant disclosure aims at providing semi-automated commissioning and/or tests. The semi-automated commissioning and/or the tests of this disclosure alleviate fault detection in buildings.

Summary

The present disclosure deals with commissioning and/or testing buildings. To that end, a communication network is established among a plurality of sensors and among a plurality of actuators. By establishing a communication network, the sensors and the actuators (each) obtain addresses such that they can be identified. During commissioning and/or test, readings are obtained from the sensors such as from lighting sensors and/or from presence detectors and/or from thermometers. Additionally, signals indicative of operating modes and/or of operating states are obtained from the various actuators such as valve actuators and/or actuators for blinds and/or damper actuators.

The readings from the various sensors are exploited by estimating a measure of similarity between these readings. More specifically, a first time series of signals is obtained from a first sensor and a second time series of signals obtained from a second sensor. The measure of similarity is estimated as a function of the first and second time series. A moving maximum filter is applied to the second series to obtain an upper-bound series from the second series. A moving minimum filter is applied to the second series to obtain a lower-bound series from the second series. The moving maximum filter and the moving minimum filter preferably each have a window size. The moving maximum filter and the moving minimum filter ideally have the same window size. If the first time series is within the lower envelope series and the upper envelope series for a given time span, the signals will substantially be similar.

Where signals from two different sensors are found to be similar, these signals can be paired with an operating mode and/or with an operating state. To that end, signals indicative of operating modes and/or of operating states are obtained from the various actuators within the building and/or within the facility. The signals indicative of operating modes and/or of operating states can also be obtained from one or more system controllers of or for the site.

Operating mode data and/or operating state data are produced from the signals indicative of operating modes and/or of operating states. The operating mode data and/or the operating state data preferably contain pairs of data, each pair comprising an operating mode and/or an operating state of an actuator and a time stamp. If the time stamp of an operating mode and/or of an operating state matches the time when two signals are similar, the operating mode and/or the operating state will be associated with the two signals. A triplet comprising series of signals obtained from the first and second sensors and an operating mode and/or an operating state can thus be formed. A triplet comprising series of signals obtained from the first and second sensors and a pair of data associated with the operating mode and/or with the operating state can also be formed.

The triplets are eventually presented to a user and/or to an operator of the site. For example, a mobile handheld device can be used to display a graphical user interface. The graphical user interface presents the triplets to the user and/or to the operator such that triplets can be selected from among the presented triplets.

The selection made the user and/or by the operator is eventually used to perform automated tests. Whenever an operating mode and/or an operating state of an actuator is present, the signals originating from the first and second sensors will be checked. If a time series originating from the first sensor and a time series originating the second sensor are dissimilar, an alert may be produced. The alert may be presented to the user and/or to the operator.

It is also envisaged that dissimilarities between sensor signals are assigned to root causes. For example, a dissimilarity between signals obtained from an actuator and signals obtained from a sensor can indicate a faulted pump. These signals can also indicate a faulted heat meter. An alert can consequently be produced and can be sent to the user and/or to the operator.

It is also envisaged that dissimilarities between sensor signals are assigned to root causes. For example, a dissimilarity between signals obtained from a sensor close to a thermal energy exchanger and wall-mounted sensor can indicate an open window. An alert indicative of an open window may thus be produced and be forwarded to the user and/or to the operator.

It is understood that not all the triplets comprising signals and operating modes and/or operating states are meaningful triplets. Even if two signals are similar, they need not be associated with a given operating mode and/or with a given operating state. For example, two sensors on the seventh floor of a site are generally not linked to an operating mode and/or to an operating state of an actuator installed elsewhere. More specifically, the two sensor signals are generally not associated with a mode or a state of window blinds installed on the first floor of that site.

To differentiate meaningful triplets from not meaningful triplets, the operating modes and/or the operating states are separated timewise. A first time span is determined. During the first time span, a first operating mode of a first actuator does not overlap with a second operating mode of a second actuator. During the first time span, a first operating state of a first actuator does also not overlap with a second operating state of a second actuator. During a second time span, the second operating mode of the second actuator does not overlap with the first operating mode of the first actuator. During a second time span, the second operating state of the second actuator does also not overlap with the first operating state of the first actuator.

The similarity between the first time series obtained from the first sensor and the second time series obtained from the second sensor is evaluated at least twice. A first evaluation focuses on the first time span when the second operating mode and/or the second operating state is not activated. A second evaluation focuses on the second time span when the first operating mode and/or the first operating state is not activated. The first evaluation yields a first partial measure of similarity, and the second evaluation yields a second partial measure of similarity. If the first partial measure of similarity exceeds the second partial measure of similarity, the triplet will be assigned to the first operating mode and/or to the first operating state. The triplet will otherwise be assigned to the second operating mode and/or to the second operating state.

Additional rules can be applied to rule out coincidental triplets. For example, signals from temperature sensors are considered dissimilar when there is no flow through an associated heat exchanger. A condition of no fluid flow through the associated heat exchanger can be directly identified using measurements. A condition of now flow can be indirectly identified from temperature readings that fluctuate around room temperature. A condition of now flow can still be indirectly identified from temperature readings that fluctuate around a reference temperature.

It can make sense to rank triplets before presenting them to a user and/or to an operator. Triplets can, for example, be ranked in accordance with a measure of similarity associated with each triplet. Triplets can also be preselected based on the user's and/or the operator's preferences. It is envisaged that such preferences are derived from past choices made by the user and/or by the building operator. The invention is defined by the subject-matter of the independent claims.

Brief description of the drawings

Various features will become apparent to those skilled in the art from the following detailed description of the disclosed non-limiting embodiments. The drawings that accompany the detailed description can be briefly described as follows:

FIG 1 shows a building with a system controller disposed inside the building. The building can be commissioned and/or tested in accordance with the instant disclosure.

FIG 2 shows a building with a system controller disposed outside the building. The building can be commissioned and/or tested in accordance with the instant disclosure.

FIG 3 shows a heating and/or ventilation and/or air-conditioning system comprising a heat pump, various sensors and a thermal energy exchanger.

FIG 4 illustrates two time series of signals.

FIG 5 shows a plot of a measure of similarity versus a distance between two time series.

FIG 6 depicts a plot of temperature versus time.

FIG 7 schematically shows a device for commissioning and/or test configured to connect to one or more system controllers.

Detailed description

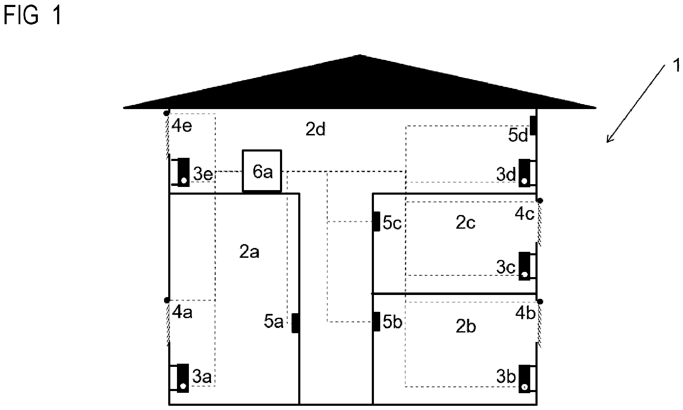

The building 1 and/or the facility as shown in FIG 1 could be any commercial and/or residential and/or industrial structure. The building 1 and/or the facility comprises a plurality of rooms 2a - 2d. The rooms 2a - 2d of the building 1 and/or of the facility come with actuators 3a - 3h, 4a - 4e and with sensors 5a - 5d. A first group of actuators 3a - 3h as shown in FIG 1 comprises valve actuators of room heaters or cooling devices or heating and cooling devices. The heating and cooling devices can, by way of non-limiting example, comprise fan coil units. The heating and cooling devices can, by way of another non-limiting example, be fan coil units. A second group of actuators 4a - 4e actuates window blinds. Other actuators such as damper actuators for ducts can be employed in the building 1 and/or in the facility. They can be commissioned and/or tested in accordance with the embodiments disclosed herein.

The sensors 5a - 5d are, by way of non-limiting example, thermometers, pressure sensors, humidity sensors, lighting sensors, presence detectors, air quality sensors, sensors for particulate matter or any combination thereof. It is envisaged that the sensors 5a - 5d are provided by a thermostat such as by a smart thermostat. The sensors 5a - 5d can also be provided by another room unit or by a room device that measures temperature. The sensors 5a - 5d can, by way of another example, be provided by fire detectors or by alarm units. The sensors 5a - 5d, can be part of standard infrastructure such as computers or internet routers with temperature sensors etc.

In a particular embodiment, at least one of the actuators 3a - 3h, 4a - 4e or at least one of the sensors 5a - 5d is operable to estimate and/or to determine its location. To that end, the device 3a - 3h, 4a - 4e, 5a - 5d, can provide a circuit component for satellite navigation such as a global positioning system (GPS). The device 3a - 3h, 4a - 4e, 5a - 5d can provide a circuit component harnessing another technology for navigation or object location. For example, the device 3a - 3h, 4a - 4e, 5a - 5d can employ one or more wireless network adapters to estimate its location and to indicate movement. For example, a European patent application EP3186657A1 was filed by SIEMENS SCHWEIZ AG on 30 October 2015. The application EP3186657A1 has by 14 April 2021 led to a granted patent EP3186657B1. EP3186657A1 and EP3186657B1 deal with a method, a digital tool, a device and a system for detecting movements of objects and/or living beings in a radio range. More specifically, EP3186657A1 and EP3186657B1 deal with detection of such movements in an indoor area.

In an embodiment, an actuator 3a - 3h, 4a - 4e or a sensor 5a - 5d measures signal strengths of wireless signals. The device 3a - 3h, 4a - 4e, 5a - 5d then uses triangulation to determine its proximity to radio frequency devices nearby. An actuator 3a - 3h, 4a - 4e or a sensor 5a - 5d can, for instance, rely on wireless internet signal strength to obtain an estimate of its location.

The device 3a - 3h, 4a - 4e, 5a - 5d can also use a sensor for particulate matter to estimate its location. High levels of particulate matter can, for instance, indicate closeness of the device to a door or to a window. In this case, high levels of particulate matter would be due to polluted outdoor air.

The actuators 3a - 3h, 4a - 4e and the sensors 5a - 5d have interfaces in order for them to communicate with one or more system controllers 6a, 6b. It is envisaged that any communication between the one or more system controllers 6a, 6b and the actuators 3a - 3h, 4a - 4e and/or sensors 5a - 5d can be bidirectional or unidirectional. One the one hand, a bidirectional connection affords flexibility. On the other hand, unidirectional connection reduces complexity.

The one or more system controllers 6a, 6b advantageously comprise one or more microcontrollers and/or one or more microprocessors. In an embodiment, the one or more system controllers 6a, 6b are one or more microcontrollers and/or one or more microprocessors. The one or more system controllers 6a, 6b preferably comprise one or more memories such as one or more non-volatile memories. That is, the one or more system controllers 6a, 6b can comprise one or more microcontrollers and one or more non-volatile memories. The one or more system controllers 6a, 6b can also comprise one or more microprocessors and one or more non-volatile memories. The one or more system controllers 6a, 6b can still be one or more microcontrollers having one or more non-volatile memories. The one or more system controllers 6a, 6b can also be one ore more microprocessors having one ore more non-volatile memories.

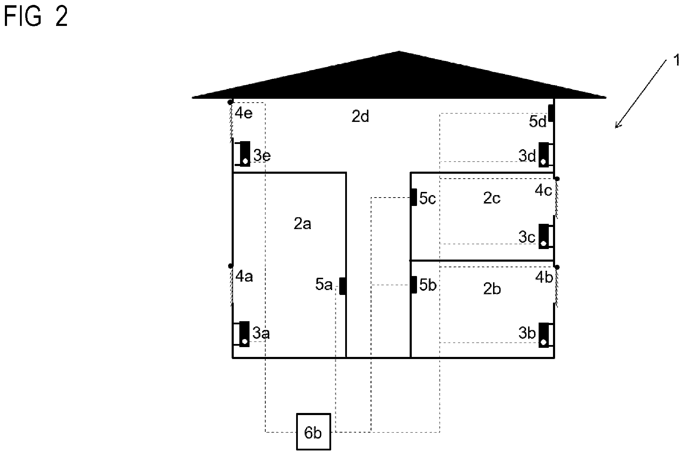

FIG 1 and FIG 2 show dashed lines to indicate communication links between the devices of an installation. It is envisaged that at least one of the links shown in FIG 1 and in FIG 2 employs encryption. It is, in particular, envisaged that some of the actuators 3a - 3h, 4a - 4e and/or some of the sensors 5a - 5d employ a Diffie-Hellman key exchange (or similar) to establish secure connections. In an alternate embodiment, some of the actuators 3a - 3h, 4a - 4e and/or some of the sensors 5a - 5d employ private and public keys of suitable length to establish secure connections.

The communication interface and/or the communication controller can, by way of example, rely on wireless solutions such as WLAN and/or KNX® RF, and/or Enocean®. Hard-wired solutions such as Ethernet® cables or KNX® cables are also considered. The choice of any wireless or hard-wired solution is typically influenced by bandwidth requirements. Sensors and/or actuators with video streaming functionality can, by way of example, require more bandwidth than other types of field devices.

It is envisaged that the actuators 3a - 3h, 4a - 4e and the sensors 5a - 5d and the one or more system controllers 6a, 6b all use a common communication protocol. It is envisaged that the devices of an installation rely on a protocol such as KNX® or Modbus or LON, or BACnet®. The actuators 3a - 3h, 4a - 4e and the sensors 5a - 5d and the one or more system controllers 6a, 6b can also rely on a proprietary protocol. The protocol preferably comprises a digital communication protocol. The protocol ideally is a digital communication protocol.

The one or more system controllers 6a can be one or more devices inside the building 1 and/or inside the facility. In an alternate embodiment, the one or more system controllers 6b are arranged outside the building 1 and/or outside the facility. The one or more system controllers 6b may, in particular, comprise a cloud computer. In an embodiment, an external system controller 6b may connect to the actuators 3a - 3h, 4a - 4e and to the sensors 5a - 5d via the Internet.

The interface modules of the actuators 3a - 3h, 4a - 4e and of the sensors 5a - 5d typically carry machine addresses. The machine addresses ideally are unique addresses. The one or more system controllers 6a, 6b upon discovery of actuators 3a - 3h, 4a - 4e or sensors 5a - 5d assign a network address to each device 3a - 3h, 4a - 4e, 5a - 5d. The network address is then used to send data packets from the one or more system controllers 6a, 6b to an actuator 3a - 3h, 4a - 4e or to a sensor 5a - 5d or vice versa.

In a particular embodiment, the network is a TCP/IP based network. In this embodiment, the one or more system controllers 6a, 6b may assign network addresses in accordance with a direct host configuration protocol (DHCP). In an alternate embodiment, the one or more system controllers 6a, 6b use a (static) lookup-up table to map machine addresses to network addresses.

Upon establishment of the network, the one or more system controllers 6a, 6b can poll (each of) the actuators 3a - 3h, 4a - 4e for its settings. The one or more system controllers 6a, 6b can, by way of example, regularly poll (each of) the actuators 3a - 3h, 4a - 4e for its settings. The one or more system controllers 6a, 6b can, by way of another example, iteratively poll (each of) the actuators 3a - 3h, 4a - 4e for its settings and/or for its operating modes and/or for its operating states. These settings and/or operating modes and/or operating states can, by way of example, indicate valve positions. They may as well indicate the positions of blinds or shutters.

The one or more system controllers 6a, 6b function to poll the sensors 5a - 5d for their readings. The one or more system controllers 6a, 6b can, by way of example, regularly poll (each of) sensors 5a - 5d. The one or more system controllers 6a, 6b can, by way of another example, iteratively poll (each of) the sensors 5a - 5d.

The one or more system controllers 6a, 6b can use a suitable protocol such as a file transfer protocol or a hypertext transfer protocol to obtain readings from actuator devices 3a - 3h, 4a - 4e and/or from sensor devices 5a - 5d. In one embodiment, the one or more system controllers 6a, 6b download readings from actuators 3a - 3h, 4a - 4e and/or from sensors 5a - 5d via secure copy.

The one or more system controllers for assigning network addresses and for obtaining readings need not be the same. According to a particular embodiment, at least one first system controller configures the network. At least one second system controller sees the network as configured by the first unit and gathers readings from actuators 3a - 3h, 4a - 4e and from sensors 5a - 5d.

Once readings have been obtained from the actuators 3a - 3h, 4a - 4e and/or from the sensors 5a - 5d, those readings can be normalised. The step of normalisation can be carried out for each actuator 3a - 3h, 4a - 4e and for each sensor 5a - 5d. Ideally, the one or more system controllers 6a, 6b carry out the one or more normalisations.

In other words, a valve position of a thermal energy exchanger that can be employed in the building 1 varies continuously or in discrete steps between fully closed and fully open. In this case, the fully closed position is normalised to a value of 0 and the fully open is normalised to a value of 1. Any valve position in between fully closed and fully open is mapped to a value that corresponds to the actual degree of opening of the valve. The valve position can, by way of non-limiting example, comprise a valve stroke. More specifically, the valve position can be a valve stroke. Suppose a valve is 30% open. The corresponding normalised value then becomes 0.3. Settings of actuators 4a - 4e for blinds are normalised in a similar or in the same fashion.

Likewise, readings from any temperature sensor such as sensor 5a can be normalised. In one exemplary embodiment, 18 degrees Celsius (291 Kelvin) may be the lowest acceptable indoor temperature for a residential building. Also, in this embodiment 28 degrees Celsius (301 Kelvin) can be the top end of the acceptable temperature range. An indoor temperature of 291 Kelvin is then mapped to a normalised value of 0. An indoor temperature of 301 Kelvin is mapped to a normalised value of 1. A temperature of 294 Kelvin is mapped to a value of 0.7. Readings from lighting sensors are normalised in a similar fashion or in the same fashion.

Presence detectors (or occupancy sensors) produce readings that differ from the readings of temperature sensors. While temperature sensors yield continuous readings, (infrared) presence detectors either detect or do not detect an individual. There are basically two indications from presence detectors and these are "detected an individual" or "detected no individual". If no individual is detected, the reading from the presence detector will be normalised to 0. The reading obtained from the presence detector will in all other cases be normalised to 1.

The normalised signal from a presence detector can lie in between 0 and 1 due to uncertainty. That is, a normalised signal of 0.7 would indicate a 70% probability of someone being present in the vicinity of the presence detector. It is envisaged that values equal to or larger than 0.5 are rounded up. A normalised signal of 0.7 then becomes 1. Likewise, a normalised signal of 0.2 is rounded to 0.

The (normalised) signal can comprise a series of values. Suppose temperatures are measured at 6 a.m. in the morning, then at 7 a.m., at 8 a.m., and so forth. In one illustrative example, the temperature measurement may be 18 degrees Celsius (291 Kelvin) at 6 a.m., 19 degrees Celsius (292 Kelvin) at 7 a.m., and 20 degrees (293 Kelvin) at 8 a.m. In this embodiment, the one or more system controllers 6a, 6b obtain readings every hour. At 8 a.m. the series of normalised values is 0, 0.1, 0.2. The one or more system controllers 6a, 6b preferably form time series of (temperature) measurements with one, two, three, four, eight, sixteen, thirty-two, sixty-four etc. values. The one or more system controllers 6a, 6b advantageously obtain readings every minute, every fifteen minutes, twice per hour, once per hour, every two hours, every four hours, every eight hours, once per day etc. The one or more system controllers 6a, 6b obtain settings and/or operating modes and/or operating states from the actuators 3a - 3h, 4a - 4e in a similar or in the same fashion.

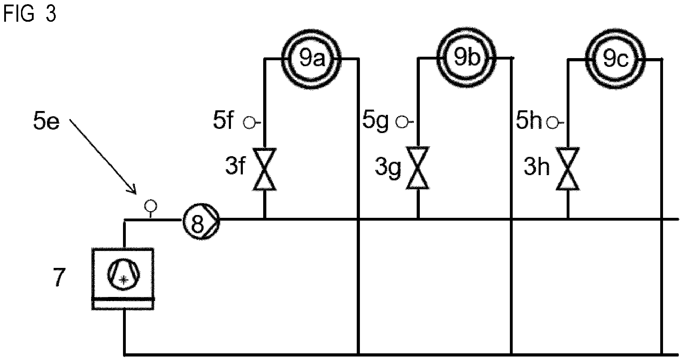

Now referring to FIG 3, system for heating and/or ventilation and/or air-conditioning is schematically shown. The system comprises a heat pump 7, a pump 8 and several temperature sensors 5e - 5h. A plurality of valves having valve actuators 3f - 3h each connects to a thermal energy exchanger 9a - 9c.

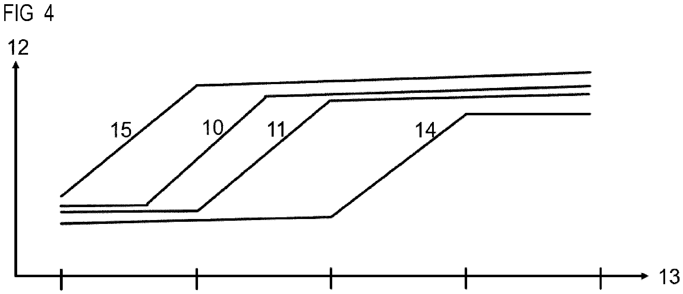

Now turning to FIG 4, a first time series of signals is read from a first sensor such as a first temperature sensor. A second time series 11 of signals is read from a second sensor such as a second temperature sensor. A first time series 10 of measured values is produced from the first time series of signals. A second time series 11 of measured values is produced from the second time series of signals.

In an embodiment, an analog-to-digital converter provides conversion of analog signals from the components sensors into (digital) measures. The analog-to-digital converter can be an integral part of the one or more system controllers 6a, 6b. That is, the analog-to-digital converter and the one or more system controllers 6a, 6b are arranged on the same system-on-a-chip.

In another embodiment, the one or more system controllers 6a, 6b comprise a sigma-delta converter. The sigma-delta converter provides conversion of analog signals from the sensors into (digital) measures. The sigma-delta converter can be an integral part of the one or more system controllers 6a, 6b. That is, the sigma-delta converter and the one or more system controllers 6a, 6b are arranged on the same system-on-a-chip.

FIG 4 shows a plot of the averaged values of the first time series 10 and the average values of the second time series 11. The measured and averaged values 12 are plotted versus time 13. In addition to the measured and averaged values, FIG 4 shows a lower-bound series 14 for the second time series 11 and an upper-bound series 15 for the second time series 11.

The lower-bound series 14 can be a lower envelope of the second time series 11. That is, the averaged values 11 of the second time series exhibit scatter. Also, the readings are not always synchronously obtained from the actuators 3a - 3h, 4a - 4e and from the sensors 5a - 5h. What's more, the resolution of the actuators (3a - 3h, 4a - 4e) and of the sensors 5a - 5h may be non-uniform and coarse. The actuators 3a - 3h, 4a - 4e and/or the sensors 5a - 5h can also be calibrated differently.

Minimum values of the second time series are iteratively determined for equidistant intervals of time. The lower envelope then comprises these minimum values of the second time series. Ideally, the lower envelope consists of these minimum values of the second time series 11.

The upper-bound series 15 can be an upper envelope of the second time series 11. That is, the averaged values 11 of the second time series exhibit scatter. Minimum values of the second time series are iteratively determined using equidistant intervals of time. The upper envelope then comprises these minimum values of the second time series. Ideally, the upper envelope consists of these minimum values of the second time series 11.

It is also envisaged that the lower-bound series 14 represents quantile values of the second time series 11. That is, the measured values 11 of the second time series 11 exhibit scatter. Quantile values of the second time series 11 are iteratively determined using equidistant intervals of time. For example, those quantiles can be 90% quantiles. That is, 90% of all measured values of the second time series 11 exceed the 90% quantile. The quantiles can, by way of another non-limiting example, be 95% quantiles. That is, 95% of all measured values of the second time series 11 exceed the 95% quantile. The quantiles can, by way of yet another non-limiting example, be 99% quantiles. That is, 99% of all measured values of the second time series 11 exceed the 99% quantile. The lower-bound series 14 then comprises such quantile values of the second time series 11. Ideally, lower-bound series 14 consists of such quantile values of the second time series 11.

It is still envisaged that the upper-bound series 15 represents quantile values of the second time series 11. That is, the measured values of the second time series 11 exhibit scatter. Quantile values of the second time series 11 are iteratively determined using equidistant intervals of time. For example, those quantiles can be 90% quantiles. That is, 90% of all measured values of the second time series 11 are less than the 90% quantile. The quantiles can, by way of another non-limiting example, be 95% quantiles. That is, 95% of all measured values of the second time series 11 are less than the 95% quantile. The quantiles can, by way of yet another non-limiting example, be 99% quantiles. That is, 99% of all measured values of the second time series 11 are less than the 99% quantile. The upper-bound series 15 then comprises such quantile values of the second time series 11. Ideally, upper-bound series 15 consists of such quantile values of the second time series 11.

The first time series 10 can be found to be within the lower and upper bounds of the second time series 11. In simple terms, the first and the second time series 10, 11 are then similar.

It can be necessary to compute a quantitative measure of similarity. The quantitative measure of similarity affords comparisons between triplets. The quantitative measure of similarity s between the first time series 10 and the second time series 11 is determined using a moving window. That is, a distance $d$ between the first time series 10 and the second time series 11 is iteratively determined using equidistant intervals of time. The distance $d$ is rescaled using a first multiplicative factor $c_1$. Where the distance $d$ exceeds $1/c_1$, a second multiplicative factor $c_2$ is applied:

$$s = \begin{cases} 1 - d \cdot c_1 & where\ d \leq d1/c_1 \\ (1 - d \cdot c_1) \cdot c_2 & where\ d > 1/c_1 \end{cases}$$

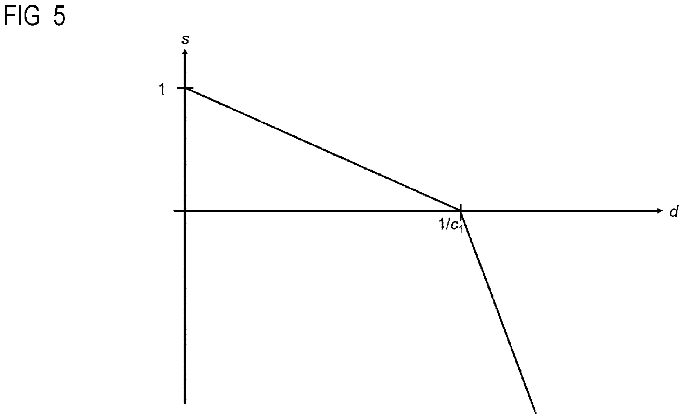

The measure of similarity $s$ will equal 1 if the first time series 10 matches the second time series 11. The similarity score s can become negative as illustrated in FIG 5. That is, the measure of similarity $s$ is positive so long as the distance measure $d$ is less than or equal to $1/c_1$. The similarity score s otherwise is negative. Where the measure of similarity $s$ is negative, the slope of the curve of s versus d will be $-c_1 \cdot c_2$.

The use of two multiplicative factors $c_1$ and $c_2$ and of negative similarities $s$ is justified because similarities of time series are often coincidental. While similarities can be coincidental, any lack of such similarities usually is a strong indicator of dissimilar time series.

Signals indicative of flow can be exploited to distinguish between similar and dissimilar time series. A plethora of valves is found on the market where such valves provide flow measurements. For example, the patent application US2022/019249A1 discloses a valve having a flow sensor. Another flow sensor situated in a fluid path is disclosed in the patent CN109240080B.

Accordingly, a signal indicative of flow is obtained from a valve or from a dedicated flow sensor. If there is no flow, time series obtained from sensors associated with the valve or with the flow sensor will be treated as dissimilar. More specifically, time series obtained from temperature sensors associated with the valve or with the flow sensor will be disregarded.

Signals from flow sensors are not always available. Where there are no signals from flow sensors, other signals can indicate no flow. For example, the signal of a sensor installed at a thermal energy exchanger may substantially not change over time. Since the signal from that sensor does not change, there is likely no flow in through the thermal energy exchanger. More specifically, a moving average of a temperature signal from such a sensor may change by less than 0.2 Kelvin over ten minutes. The moving average may even change by less than 0.5 Kelvin over ten minutes. The window size for calculating the moving average can, by way of non-limiting examples, the thirty seconds or one minute. Any time series obtained from that sensor installed at the thermal energy exchanger will then be disregarded.

A no flow condition can also be determined where a time series originating from a temperature sensor closely fluctuates around room temperature. A no flow condition can still be determined where a time series originating from a temperature sensor closely fluctuates around a reference temperature. For example, a first sensor installed at or near a thermal energy exchanger indicates temperatures fluctuating between 294.3 Kelvin and 295.2 Kelvin over ten minutes. A second sensor installed elsewhere and recording room temperature indicates a room temperature of 294.5 Kelvin. Since the time series originating from the first sensor closely fluctuates around room temperature, there is likely no flow through the thermal energy exchanger. Any time series originating from that sensor installed at or near the thermal energy exchanger will be disregarded.

There may be a determination of zero flow through a thermal energy exchanger if a time series fluctuates by less than 0.8 Kelvin around room temperature. There may also be a determination of zero flow through a thermal energy exchanger if a time series fluctuates by less than 0.8 Kelvin around a reference temperature. In a similar embodiment, the determination of zero flow is made where fluctuations are below 0.5 Kelvin or below 0.3 Kelvin. The determination is preferably made by the one or more system controllers 6a, 6b.

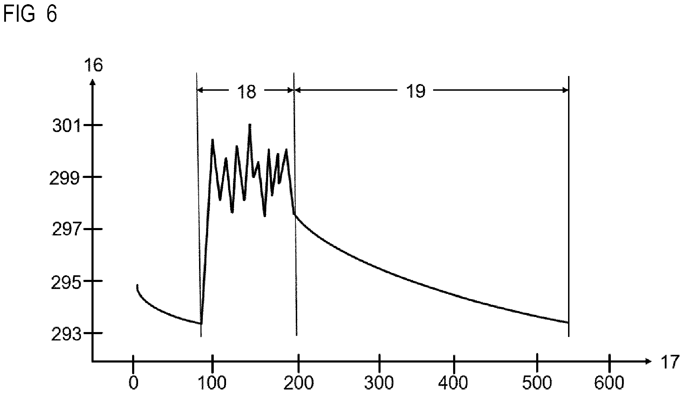

Time series can exhibit an exponential increase or an exponential decay. To that end, FIG 6 shows a plot of temperature 16 in Kelvin versus time 17 in seconds. In a first domain 18, a time series obtained from a temperature sensor fluctuates. A second domain 19 follows the first domain 18. The second domain 19 exhibits an exponential decay.

Time series exhibiting an exponential decay will be tagged. Preferably, the one or more system controllers 6a, 6b will tag time series exhibiting the exponential decay. After the tagging, those tagged time series are dealt with in the same or in a similar way as time series associated with flow measurements. Those time series are considered dissimilar. Preferably, the one or more system controllers 6a, 6b classifies those time series as dissimilar.

Preferably, time series exhibiting an exponential decay are considered as indicative of zero flow. Those time series are advantageously disregarded. In an embodiment, triplets comprising such time series are tagged as dissimilar.

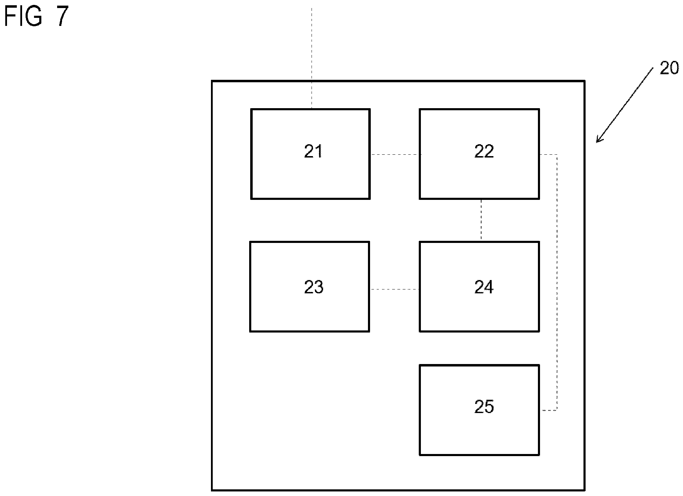

Eventually, triplets comprising two time series and an operating mode and/or an operating state become available. Preferably, these triplets become available at the one or more system controllers 6a, 6b. A user and/or an operator can then interact with the one or more system controllers 6a, 6b and select triplets of interest. To that end, the user and/or the operator can harness the device 20 shown in FIG 7. In an embodiment, the device 20 shown in FIG 7 comprises a mobile handheld device. In a special embodiment, the device 20 shown in FIG 7 is a mobile handheld device.

The device 20 ideally is in communicative connection with the one or more system controllers 6a, 6b. To that end, the device 20 comprises a network adapter 21 such as a wireless network adapter. The device 20 receives signals indicative of the triplets via the network adapter 21 and forwards the signals to the processor 22. The processor 22 produces triplets from the signals received by the network adapter 21. The processor 22 produces presentation signals from the triplets. The presentation signals advantageously are associated with a graphical user interface. The processor 22 forwards the presentation signals to a human-machine interface 23, 24.

A human-machine interface 23, 24 according to this disclosure preferably comprises a display 23 with a suitable resolution. Suitable resolutions include, but are not limited to 426 x 320 pixels, 470 x 320 pixels, 640 x 480 pixels, 960 x 720 pixels. In a preferred embodiment, the human-machine interface 23, 24 of this disclosure comprises a monochrome or a colour display 23. The display 23 may be a liquid-crystal display. The display 23 may also comprise organic light-emitting diodes. The human-machine interface 23, 24 preferably also provides input devices 24 such as, by way of non-limiting examples, keyboards, buttons, touch screens, capacitive touch screens, voice recognition, track points etc. The device 20 further provides a memory 25 in communicative connection with the processor 22.

When the user and/or the operator has selected certain triplets, the device 20 returns the selected triplets to the one or more system controllers 6a, 6b. The selected triplets are preferably returned via the network adapter 21.

The one or more system controllers 6a, 6b receive signals indicative of the selected triplets. One or more processors of the one or more system controllers 6a, 6b then produce selected triplets from the received signals indicative of selected triplets. The one or more system controllers 6a, 6b use the selected triplets to perform tests of the building 1 and/or of the facility.

Where a test reveals that time series that should be similar are not similar, an alert is produced. The alert can, by way of another non-limiting example, be indicative of a faulted pump 8 of the system for heating and/or ventilation and/or air-conditioning shown in FIG 3.

The alert can, by way of another non-limiting example, be indicative of a window left open. The one or more system controllers 6a, 6b can comprise one or more human-machine interfaces to communicate those alerts to a user and/or to an operator. The one or more system controllers 6a, 6b can also forward alerts to the device 20 shown in FIG 7. More specifically, the one or more system controllers 6a, 6b can forward alerts to one or more mobile handheld devices 20.

The network adapter 21 of the device 20 thus receives signals indicative of the alerts. The processor 22 produces alert data from the signals indicative of the alerts. More specifically, the processor 22 can produce alert data to be presented to the user and/or to the operator via a graphical user interface. The human-machine interface 23, 24 of the device 20 preferably functions to present alerts to a user and/or to an operator via the graphical user interface.

As described in detail herein, the present disclosure deals with a method of detecting faults in a structure (1) having a data network and at least one first actuator (3a - 3h, 4a - 4e) connecting to the data network, and having first and second sensors (5a - 5h), each sensor (5a - 5h) connecting to the data network, the method comprising the steps of:

obtaining via the data network from the at least one first actuator (3a - 3h, 4a - 4e) one or more signals indicative of a test operating mode and/or of a test operating state and from each of the first and second sensors (5a - 5h) one or more signals indicative of a time series of test readings;

producing a test operating mode and/or a test operating state from the one or more signals indicative of a test operating mode and/or of a test operating state and a first time series of test values from the one or more signals obtained from the first sensor (5a - 5h) and a second time series of test values from the one or more signals obtained from the second sensor (5a - 5h);

searching for the test operating mode and/or for the test operating state in a first list, and searching for the first and second sensors (5a - 5h) in a second list;

if the test operation mode is found in the first list and the first and second sensors (5a - 5h) are found in the second list:

determining a test numerical measure s between the first time series of test values and the second time series of test values, the test numerical measure s being a predefined constant when the first time series of test values matches the second time series of test values and otherwise deviating from the predefined constant;

determining a test deviation of the test numerical measure s from the predefined constant and comparing the test deviation to a test threshold value;

if the test deviation exceeds the test threshold value:

producing fault data based on the test deviation; and

using the fault data to alert a user and/or an operator.

The structure (1) preferably comprises a building. The structure (1) ideally is a building.

The first sensor (5a - 5h) is advantageously different from the second sensor (5a - 5h). The first sensor (5a - 5h) is preferably different from the at least one first actuator (3a - 3h, 4a - 4e). The second sensor (5a - 5h) is advantageously different from the at least one first actuator (3a - 3h, 4a - 4e).

In a special embodiment, the numerical measure s comprises a measure of similarity s. In a yet more special embodiment, the numerical measure s is a measure of similarity s. It is also envisaged that the numerical measures s comprises a numerical value s. It is still envisaged that the numerical measures s is a numerical value s.

The test numerical measure if advantageously determined if the test operation mode is found in the first list and the first and second sensors (5a - 5h) are each found in the second list.

The present disclosure still deals with any of the aforementioned methods, the method comprising the step of:

comparing the test deviation to a test threshold value or to the test threshold value.

The instant disclosure also deals with any of the aforementioned methods, the method comprising the step of:

producing a test operating mode and/or a test operating state from the one or more signals indicative of a test operating mode and/or of a test operating state and a first time series of test values from the one or more signals indicative of a time series of test readings obtained from the first sensor (5a - 5h) and a second time series of test values from the one or more signals indicative of a time series of test readings obtained from the second sensor (5a - 5h).

The present disclosure still deals with any of the aforementioned methods, the method comprising the step of:

determining a test numerical measure s between the first time series of test values and the second time series of test values, the test numerical measure *s* being a predefined constant when the first time series of test values matches the second time series of test values and deviating from the predefined constant when the first time series of test values is different from the second time series of test values.

It is envisaged that the first list and the second list form a single list. That is, the test operating modes and/or the test operating states and the sensors (5a - 5h) are searched for in the same list. A single list reduces the complexity of the solution.

It is envisaged that the first list comprises a lookup table of operating modes and/or of operating states. It is still envisaged that the first list is a lookup table of operating modes and/or of operating states. It is also envisaged that the second list comprises a lookup table of sensors. It is still envisaged that the second list is a lookup table of sensors.

The predefined constant advantageously is one. In another embodiment, the predefined constant is zero.

The instant disclosure also deals with any of the aforementioned methods, the method comprising one or more iterations of:

determining a distance d between the first time series of test values and the second time series of test values;

rescaling the determined distance d between the first time series of test values and the second time series of test values; and

adding the rescaled distance between the first time series of test values and the second time series of test values to or subtracting the rescaled distance between the first time series of test values and the second time series of test values from the test numerical measure $s$.

The present disclosure also deals with any of the aforementioned methods, the method comprising one or more iterations of:

applying a moving window filter to the first time series of test values to obtain a first filtered test value;

applying the moving window filter to the second time series of test values to obtain a second filtered test value;

determining a distance d between the first filtered test value and the second filtered test value;

rescaling the determined distance $d$ between the first filtered test value and the second filtered test value; and

adding the rescaled distance to or subtracting the rescaled distance from the test numerical measure $s$.

The moving window filter preferably has a window size of sixty seconds or less. The moving window filter advantageously has a window size of twelve seconds or less. The moving window filter advantageously has a window size of six seconds or less. Small window sizes improve on granularity.

The instant disclosure still deals with any of the aforementioned methods involving a determined distance $d$, each iteration comprising the steps of:

comparing the determined distance $d$ to a distance threshold value; and

if the determined distance $d$ exceeds the distance threshold value:

using a first multiplicative factor $c_1$ to rescale the determined distance $d$;

otherwise:

using a second multiplicative factor $c_2$ to rescale the determined distance $d$;

wherein the first multiplicative factor $c_1$ is different from the second multiplicative factor $c_2$.

In an embodiment, the first multiplicative factor

$c_1$ exceeds the second multiplicative factor $c_2$, $c_1 > c_2$. In an alternate embodiment, the second multiplicative factor $c_2$ exceeds the first multiplicative factor $c_1$, $c_1 < c_2$.

It is envisaged that the aforementioned iterative methods comprise more than two, more than five, or even more than ten iterations. Many iterations improve on granularity.

The instant disclosure still further deals with any of the aforementioned methods, the method comprising the step of:

if the test deviation exceeds the test threshold value: producing the fault data based on the test deviation and based on at least one of:

- the at least one first actuator (3a - 3h, 4a - 4e),
- the first sensor (5a - 5h),
- the second sensor (5a - 5h),
- the test numerical measure $s$.

The instant disclosure also deals with any of the aforementioned methods, the method comprising the step of:

if the test deviation exceeds the test threshold value: producing the fault data based on the test deviation and based on at least two of:

- the at least one first actuator (3a - 3h, 4a - 4e),
- the first sensor (5a - 5h),
- the second sensor (5a - 5h),
- the test numerical measure $s$.

The instant disclosure also deals with any of the aforementioned methods, the method comprising the step of:

if the test deviation exceeds the test threshold value: producing the fault data based on the test deviation and based on at least three of:

- the at least one first actuator (3a - 3h, 4a - 4e),
- the first sensor (5a - 5h),
- the second sensor (5a - 5h),
- the test numerical measure $s$.

The more data are added to the fault data, the better the user and/or the operator will be informed.

The present disclosure also deals with any of the aforementioned methods, wherein the first sensor (5a - 5h) is associated with a thermal energy exchanger, the thermal energy exchanger being installed at or near a window, and the second sensor is or comprises a room temperature sensor (5a - 5h), the method comprising the steps of:

if the test deviation exceeds the test threshold value:

producing fault data indicative of the window left open based on the test deviation; and

using the fault data indicative of the window left open to alert the user and/or the operator.

In an embodiment, a valve (3a - 3d) of a thermal energy exchanger comprises the first temperature sensor (5a - 5h). Windows that are left open are a major cause of wasted power.

The thermal energy exchanger is preferably installed less than five meters from the window, ideally less than two meters from the window or even less than one meter from the window. These distances refer to the closest distance between the window and the thermal energy exchanger.

The instant disclosure still deals with any of the aforementioned methods, the method comprising the steps of:

> obtaining via the data network from the at least one first actuator (3a - 3h, 4a - 4e) one or more signals indicative of an initial operating mode and/or of an initial operating state and from each of the first and second sensors (5a - 5h) one or more signals indicative of a time series of initiation readings;
>
> producing an initial operating mode and/or an initial operating state from the one or more signals indicative of an initial operating mode and/or of an initial operating state and a first time series of initiation values from the one or more signals indicative of a time series of initiation readings obtained from the first sensor (5a - 5h) and a second time series of initiation values from the one or more signals indicative of a time series of initiation readings obtained from the second sensor (5a - 5h); and
>
> determining an initial numerical measure $s$ between the first time series of initiation values and the second time series of initiation values, the initial numerical measure $s$ being the predefined constant when the first time series of initiation values matches the second time series of initiation values and otherwise deviating from the predefined constant.

It is envisaged that the first time series of initiation values comprises a first time series of initial values. More specifically, the first time series of initiation values can be a first time series of initial values. It is envisaged that the second time series of initiation values comprises a second time series of initial values. More specifically, the second time series of initiation values can be a second time series of initial values.

The instant disclosure also deals with any of the aforementioned methods, the method comprising the step of:
producing an initial operating mode and/or an initial operating state from the one or more signals indicative of an initial operating mode and/or of an initial operating state and a first time series of initiation values from the one or more signals indicative of a time series of initiation readings obtained from the first sensor (5a - 5h) and a second time series of initiation values from the one or more signals indicative of a time series of initiation readings obtained from the second sensor (5a - 5h).

The present disclosure still deals with any of the aforementioned methods, the method comprising the step of:
determining an initial numerical measure s between the first time series of initiation values and the second time series of initiation values, the initial numerical measure s being the predefined constant when the first time series of initiation values matches the second time series of initiation values and deviating from the predefined constant when the first time series of initiation values is different from the second time series of initiation values.

The instant disclosure yet further deals with any of the aforementioned methods involving a time series of initiation values, the method comprising one or more iterations of:

> determining a distance $d$ between the first time series of initiation values and the second time series of initiation values;
>
> rescaling the determined distance $d$ between the first time series of initiation values and the second time series of initiation values; and
>
> adding the rescaled distance between the first time series of initiation values and the second time series of initiation values to or subtracting the rescaled distance between the first time series of initiation values and the second time series of initiation values from the initial numerical measure $s$.

The present disclosure yet further deals with any of the aforementioned methods involving a time series of initiation values, the method comprising one or more iterations of:
applying the moving window filter to the first time series of initiation values to obtain a first filtered initiation value;

> applying the moving window filter to the second time series of initiation values to obtain a second filtered initiation value;
>
> determining a distance $d$ between the first filtered initiation value and the second filtered initiation value;
>
> rescaling the determined distance d between the first filtered initiation value and the second filtered initiation value; and
>
> adding the rescaled distance between the first filtered initiation value and the second filtered initiation value to or subtracting the rescaled distance between the first filtered initiation value and the second filtered initiation value from the initial numerical measure $s$.

The moving window filter preferably has a window size of sixty seconds or less. The moving window filter advantageously has a window size of twelve seconds or less. The moving window filter advantageously has a window size of six seconds or less. Small window sizes improve on granularity.

The instant disclosure yet further deals with any of the aforementioned methods involving a time series of initiation values and a determined distance $d$, each iteration comprising the steps of:

comparing the determined distance $d$ to the distance threshold value; and
if the determined distance $d$ exceeds the distance threshold value:

using the first multiplicative factor $c_1$ to rescale the determined distance $d$;
otherwise:
using the second multiplicative factor $c_2$ to rescale the determined distance $d$.

The present disclosure also deals with any of the aforementioned methods involving a time series of initiation values, the method comprising the steps of:

producing the initiation data based on the initial numerical measure s and based on at least one of:

- the at least one first actuator (3a - 3h, 4a - 4e),
- the first sensor (5a - 5h),
- the second sensor (5a - 5h),
- an initial deviation of the initial numerical measure s from the predefined constant;

forwarding the initiation data to the user and/or to the operator;
after forwarding the initiation data, receiving from the user and/or from the operator a choice signal indicative of an affirmative or a negative choice made by the user and/or by the operator;
producing a binary choice value indicative of the affirmative choice or of the negative choice from the choice signal; and
if the binary choice value is affirmative:
adding the initial operating mode and/or the initial operating state to the first list.

The present disclosure also deals with any of the aforementioned methods involving initiation data, the method comprising the step of:
determining the test threshold value as a function of the initiation data.

The present disclosure still deals with any of the aforementioned methods involving initiation data, the method comprising the step of:
calculating the test threshold value as a function of the initiation data.

The instant disclosure still further deals with any of the aforementioned methods involving a choice signal, the method comprising the step of:
if the binary choice value is affirmative:
adding the initial operating mode and/or the initial operating state as an operating mode and/or as an operating state to the first list.

The present disclosure still deals with any of the aforementioned methods involving a choice signal, the method comprising the step of:
if the binary choice value is affirmative:
adding the first and second sensors (5a - 5h) to the second list.

The instant disclosure also deals with any of the aforementioned methods involving a time series of initiation values, the method comprising the steps of:

determining a measure of change of the first time series of initiation values; and
if the measure of change exceeds a change threshold value:
forwarding the initiation data to the user and/or to the operator.

In an embodiment, the measure of change is determined by applying a regression analysis to the first time series of initiation values, the regression analysis yielding a slope and the slope becoming the measure of change. In an alternate embodiment, the measure of change is determined by determining a variance of the first time series of initiation values, the variance becoming the measure of change. The change threshold value preferably is a predetermined change threshold value. A predetermined change threshold value rather than a variable change threshold value affords a solution that is less prone to misconfiguration.

The present disclosure still deals with any of the aforementioned methods involving a time series of initiation values, the method comprising the steps of:

determining an or the initial deviation of the initial numerical measure s from the predefined constant and comparing the initial deviation to an initial threshold value; and
if the initial deviation is less than the initial threshold value:
adding the initial operating mode and/or the initial operating state to the first list.

In an embodiment, the initial threshold value is the same as the test threshold value. Same or similar threshold values reduce the complexity of the solution and reduce the amount of memory required for storing such values. Same or similar threshold values also lower the odds of misconfigurations. In an alternate embodiment, the initial threshold value is different from the test threshold value. Different threshold values afford greater flexibility. More specifically, users can configure different thresholds for test setup and test execution.

The instant disclosure still deals with any of the aforementioned methods involving an initial threshold value, the method comprising the step of:
if the initial deviation is less than the initial threshold value:

adding the initial operating mode and/or the initial operating state as an operating mode and/or as an operating state to the first list.

The present disclosure also deals with any of the aforementioned methods involving an initial threshold value, the method comprising the step of:

if the initial deviation is less than the initial threshold value:

adding the first and second sensors (5a - 5h) to the second list.

The present disclosure still further deals with a computer program comprising instructions to one or more system controllers (6a, 6b) in communicative connection with a data network to execute the steps of any of the aforementioned methods.

The present disclosure still further deals with a computer-readable medium having stored thereon the aforementioned computer program.

The instant disclosure also deals with a computer-readable medium comprising instructions which, when executed by one or more system controllers (6a, 6b) in communicative connection with the data network, cause the one or more system controllers (6a, 6b) to carry out the steps of any of the methods of the present disclosure.

Any steps of a procedure according to the present disclosure can be embodied in hardware and/or in a software module executed by a processor. Any steps of such a procedure can also be embodied in a software module executed by a processor inside a container using operating system level virtualisation. Any steps of such a procedure can still be embodied in a cloud computing arrangement. It is envisaged that any steps of a procedure according to the present disclosure is implemented in a combination of the above embodiments. The software may include a firmware and/or a hardware driver run by the operating system and/or an application program. Thus, the disclosure also relates to a computer program product for performing the operations presented herein. If implemented in software, the functions described may be stored as one or more instructions on a computer-readable medium. Storage media that can be used include, by way of non-limiting examples, random access memory (RAM) and/or read only memory (ROM) and/or flash memory. Storage media can, by way of non-limiting examples, also include EPROM memory and/or EEPROM memory and/or registers and/or a hard disk and/or a removable disk. Further storage media can, by way of non-limiting examples, include other optical disks and/or any available media that can be accessed by a computer. Storage media can still, by way of non-limiting example, include any other IT equipment and appliance.

It should be understood that the foregoing relates only to certain embodiments of the disclosure. Numerous changes can be made therein without departing from the scope of the disclosure as defined by the following claims. It should also be understood that the disclosure is not restricted to the illustrated embodiments. Various modifications can be made within the scope of the following claims.

Reference numerals

1 building
2a - 2d rooms
3a - 3h valve actuators (of thermal energy exchangers)
4a - 4e actuators for windows, window blinds and lights (switches, dimmers)
5a - 5h sensors
6a system controller inside the building
6b system controller outside the building
7 heat pump
8 pump
9a - 9c thermal energy exchanger
10 time series
11 time series
12 ordinate axis indicative of a received signal
13 abscissa axis indicative of time
14 lower-bound series, lower envelope
15 upper-bound series, upper envelope
16 ordinate axis indicative of temperature
17 abscissa axis indicative of time
18 domain
19 domain
20 device
21 network adapter
22 processor, especially a microcontroller and/or a microprocessor
23 display
24 one or more input devices
25 memory

**Claims**

1. A method of detecting faults in a structure (1) having a data network and at least one first actuator (3a - 3h, 4a - 4e) connecting to the data network, and having first and second sensors (5a - 5h), each sensor (5a - 5h) connecting to the data network, the method comprising the steps of:

    obtaining via the data network from the at least one first actuator (3a - 3h, 4a - 4e) one or more signals indicative of a test operating mode and/or of a test operating state and from each of the first and second sensors (5a - 5h) one or more signals indicative of a time series of test readings;

    producing a test operating mode and/or a test operating state from the one or more signals indicative of a test operating mode and/or of a test operating state and a first time series of test values from the one or more signals obtained from the first sensor (5a - 5h) and a second time series of test values from the one or more signals obtained from the second sensor (5a - 5h); searching for the test operating mode and/or for the test operating state in a first list, and searching for the first and second sensors (5a - 5h) in a second list; if the test operation mode is found in the first list and the first and second sensors (5a - 5h) are found in the second list:

> determining a test numerical measure s between the first time series of test values and the second time series of test values, the test numerical measure s being a predefined constant when the first time series of test values matches the second time series of test values and otherwise deviating from the predefined constant; determining a test deviation of the test numerical measure $s$ from the predefined constant; if the test deviation exceeds a test threshold value:

>> producing fault data based on the test deviation; and using the fault data to alert a user and/or an operator.

2. The method according to claim 1, the method comprising one or more iterations of:

> determining a distance $d$ between the first time series of test values and the second time series of test values; rescaling the determined distance $d$ between the first time series of test values and the second time series of test values; and adding the rescaled distance between the first time series of test values and the second time series of test values to or subtracting the rescaled distance between the first time series of test values and the second time series of test values from the test numerical measure $s$.

3. The method according to claim 2, the method comprising one or more iterations of:

> applying a moving window filter to the first time series of test values to obtain a first filtered test value; applying the moving window filter to the second time series of test values to obtain a second filtered test value; determining a distance $d$ between the first filtered test value and the second filtered test value; rescaling the determined distance $d$ between the first filtered test value and the second filtered test value; and adding the rescaled distance to or subtracting the rescaled distance from the test numerical measure $s$.

4. The method according to claim 2 or claim 3, each iteration comprising the steps of:

> comparing the determined distance $d$ to a distance threshold value; and if the determined distance $d$ exceeds the distance threshold value:

>> using a first multiplicative factor $c_1$ to rescale the determined distance $d$; otherwise:

>>> using a second multiplicative factor $c_2$ to rescale the determined distance $d$; wherein the first multiplicative factor $c_1$ is different from the second multiplicative factor $c_2$.

5. The method according to any of the claims 1 to 4, the method comprising the step of: if the test deviation exceeds the test threshold value: producing the fault data based on the test deviation and based on at least one of:

> - the at least one first actuator (3a - 3h, 4a - 4e),
> - the first sensor (5a - 5h),
> - the second sensor (5a - 5h),
> - the test numerical measure s.

6. The method according to any of the claims 1 to 5, the method comprising the steps of:

> obtaining via the data network from the at least one first actuator (3a - 3h, 4a - 4e) one or more signals indicative of an initial operating mode and/or of an initial operating state and from each of the first and second sensors (5a - 5h) one or more signals indicative of a time series of initiation readings; producing an initial operating mode and/or an initial operating state from the one or more signals indicative of an initial operating mode and/or of an initial operating state and a first time series of initiation values from the one or more signals indicative of a time series of initiation readings obtained from the first sensor (5a - 5h) and a second time series of initiation values from the one or more signals indicative of a time series of initiation readings obtained from the second sensor (5a - 5h); and

determining an initial numerical measure $s$ between the first time series of initiation values and the second time series of initiation values, the initial numerical measure s being the predefined constant when the first time series of initiation values matches the second time series of initiation values and otherwise deviating from the predefined constant.

7. The method according to claim 6, the method comprising one or more iterations of:

determining a distance $d$ between the first time series of initiation values and the second time series of initiation values; rescaling the determined distance $d$ between the first time series of initiation values and the second time series of initiation values; and adding the rescaled distance between the first time series of initiation values and the second time series of initiation values to or subtracting the rescaled distance between the first time series of initiation values and the second time series of initiation values from the initial numerical measure $s$.

8. The method according to claim 7, the method comprising one or more iterations of:

applying the moving window filter to the first time series of initiation values to obtain a first filtered initiation value; applying the moving window filter to the second time series of initiation values to obtain a second filtered initiation value; determining a distance $d$ between the first filtered initiation value and the second filtered initiation value; rescaling the determined distance $d$ between the first filtered initiation value and the second filtered initiation value; and adding the rescaled distance between the first filtered initiation value and the second filtered initiation value to or subtracting the rescaled distance between the first filtered initiation value and the second filtered initiation value from the initial numerical measure $s$.

9. The method according to claim 7 or claim 8, each iteration comprising the steps of:

comparing the determined distance $d$ to the distance threshold value; and if the determined distance $d$ exceeds the distance threshold value:

using the first multiplicative factor $c_1$ to rescale the determined distance $d$;

otherwise:
using the second multiplicative factor $c_2$ to rescale the determined distance $d$.

10. The method according to any of the claims 6 to 9, the method comprising the steps of:

producing initiation data based on the initial numerical measure s and based on at least one of:

- the at least one first actuator (3a - 3h, 4a - 4e),
- the first sensor (5a - 5h),
- the second sensor (5a - 5h),
- an initial deviation of the initial numerical measure $s$ from the predefined constant;

forwarding the initiation data to the user and/or to the operator; after forwarding the initiation data, receiving from the user and/or from the operator a choice signal indicative of an affirmative or a negative choice made by the user and/or by the operator; producing a binary choice value indicative of the affirmative choice or of the negative choice from the choice signal; and if the binary choice value is affirmative: adding the initial operating mode and/or the initial operating state to the first list.

11. The method according to claim 10, the method comprising the step of: determining the test threshold value as a function of the initiation data.

12. The method according to any of the claims 6 to 11, the method comprising the steps of:

determining a measure of change of the first time series of initiation values; and if the measure of change exceeds a change threshold value: forwarding the initiation data to the user and/or to the operator.

13. The method according to any of the claims 6 to 12, the method comprising the steps of:

determining an or the initial deviation of the initial numerical measure s from the predefined constant and comparing the initial deviation to an initial threshold value; and if the initial deviation is less than the initial threshold value: adding the initial operating mode and/or the initial operating state to the first list.

**14.** A computer program comprising instructions to one or more system controllers (6a, 6b) in communicative connection with a data network to execute the steps of any of the methods according to the claims 1 to 13.

**15.** A computer-readable medium having stored thereon the computer program of the claim 14.

**Patentansprüche**

**1.** Verfahren zum Erkennen von Fehlern in einem Bauwerk (1) mit einem Datennetzwerk und mindestens einem mit dem Datennetzwerk verbundenen ersten Aktor (3a - 3h, 4a - 4e) und mit ersten und zweiten Sensoren (5a - 5h), wobei jeder Sensor (5a - 5h) mit dem Datennetzwerk verbunden ist, wobei das Verfahren folgende Schritte umfasst:

Erhalten eines oder mehrerer Signale, die einen Testbetriebsmodus und/oder einen Testbetriebszustand angeben, aus dem mindestens einen ersten Aktor (3a - 3h, 4a - 4e) und eines oder mehrerer Signale, die eine Zeitreihe von Testablesewerten angeben, aus jedem der ersten und zweiten Sensoren (5a - 5h) über das Datennetzwerk,
Erzeugen eines Testbetriebsmodus und/oder eines Testbetriebszustands aus dem einen oder den mehreren Signalen, die einen Testbetriebsmodus und/oder einen Testbetriebszustand angeben, und einer ersten Zeitreihe von Testwerten aus dem einen oder den mehreren Signalen, die aus dem ersten Sensor (5a - 5h) erhalten werden, und einer zweiten Zeitreihe von Testwerten aus dem einen oder den mehreren Signalen, die aus dem zweiten Sensor (5a - 5h) erhalten werden,
Suchen nach dem Testbetriebsmodus und/oder dem Testbetriebszustand in einer ersten Liste und nach den ersten und den zweiten Sensoren (5a - 5h) in einer zweiten Liste,
wenn der Testbetriebsmodus in der ersten Liste und die ersten und die zweiten Sensoren (5a - 5h) in der zweiten Liste gefunden werden:

Bestimmen eines numerischen Testmaßes s zwischen der ersten Zeitreihe von Testwerten und der zweiten Zeitreihe von Testwerten, wobei das numerische Testmaß s eine vorgegebene Konstante ist, wenn die erste Zeitreihe von Testwerten mit der zweiten Zeitreihe von Testwerten übereinstimmt, und anderenfalls von der vorgegebenen Konstante abweicht,
Bestimmen einer Testabweichung des numerischen Testmaßes s von der vorgegebenen Konstante,
wenn die Testabweichung einen Testgrenzwert überschreitet:

Erzeugen von Fehlerdaten auf der Grundlage der Testabweichung und Benutzen der Fehlerdaten zum Alarmieren eines Benutzers und/oder einer Bedienperson.

**2.** Das Verfahren nach Anspruch 1, das eine oder mehrere Wiederholungen von Folgendem umfasst:

Bestimmen eines Abstands d zwischen der ersten Zeitreihe von Testwerten und der zweiten Zeitreihe von Testwerten,
Neuskalieren des bestimmten Abstands d zwischen der ersten Zeitreihe von Testwerten und der zweiten Zeitreihe von Testwerten und
Addieren des neu skalierten Abstands zwischen der ersten Zeitreihe von Testwerten und der zweiten Zeitreihe von Testwerten zu oder Subtrahieren des neu skalierten Abstands zwischen der ersten Zeitreihe von Testwerten und der zweiten Zeitreihe von Testwerten von dem numerischen Testmaß s.

**3.** Das Verfahren nach Anspruch 2, das eine oder mehrere Wiederholungen von Folgendem umfasst:

Anwenden eines Filters mit gleitendem Fenster auf die erste Zeitreihe von Testwerten zwecks Erhaltens eines ersten gefilterten Testwerts,
Anwenden des Filters mit gleitendem Fenster auf die zweite Zeitreihe von Testwerten zwecks Erhaltens eines zweiten gefilterten Testwerts,
Bestimmen eines Abstands d zwischen dem ersten gefilterten Testwert und dem zweiten gefilterten Testwert,
Neuskalieren des bestimmten Abstands d zwischen dem ersten gefilterten Testwert und dem zweiten gefilterten Testwert und
Addieren des neuskalierten Abstands zu oder Subtrahieren des neuskalierten Abstands von dem numerischen Testmaß s.

**4.** Das Verfahren nach Anspruch 2 oder 3, wobei jede Wiederholung folgende Schritte umfasst:

Vergleichen des bestimmten Abstands d mit einem Abstandsgrenzwert und,
wenn der bestimmte Abstand d den Abstandsgrenzwert überschreitet:

Benutzen eines ersten Multiplikationsfaktors $c_1$ zum Neuskalieren des bestimmten Abstands d,
anderenfalls:

Benutzen eines zweiten Multiplikationsfaktors c2 zum Neuskalieren des bestimmten Abstands d,

wobei sich der erste Multiplikationsfaktor c1 von dem zweiten Multiplikationsfaktor c2 unterscheidet.

5. Das Verfahren nach einem der Ansprüche 1 bis 4, das folgenden Schritt umfasst:

wenn die Testabweichung den Testgrenzwert überschreitet:

Erzeugen der Fehlerdaten auf der Grundlage der Testabweichung und mindestens eines der folgenden Elemente:

- des mindestens einen ersten Aktors (3a - 3h, 4a - 4e),
- des ersten Sensors (5a - 5h),
- des zweiten Sensors (5a - 5h),
- des numerischen Testmaßes s.

6. Das Verfahren nach einem der Ansprüche 1 bis 5, das folgende Schritte umfasst:

Erhalten eines oder mehrerer Signale, die einen ursprünglichen Betriebsmodus und/oder einen ursprünglichen Betriebszustand angeben, aus dem mindestens einen ersten Aktor (3a - 3h, 4a - 4e) und eines oder mehrerer Signale, die eine Zeitreihe von Anfangsmessergebnissen angeben, aus jedem der ersten und zweiten Sensoren (5a - 5h) über das Datennetzwerk,

Erzeugen eines ursprünglichen Betriebsmodus und/oder eines ursprünglichen Betriebszustands aus dem einen oder den mehreren Signalen, die einen ursprünglichen Betriebsmodus und/oder einen ursprünglichen Betriebszustand angeben, und einer ersten Zeitreihe von Anfangswerten aus dem einen oder den mehreren Signalen, die eine Zeitreihe von aus dem ersten Sensor (5a - 5h) erhaltenen Anfangsmessergebnissen angeben, und einer zweiten Zeitreihe von Anfangswerten aus dem einen oder den mehreren Signalen, die eine Zeitreihe von aus dem zweiten Sensor (5a - 5h) erhaltenen Anfangsmessergebnissen angeben, und

Bestimmen eines ursprünglichen numerischen Maßes s zwischen der ersten Zeitreihe von Anfangswerten und der zweiten Zeitreihe von Anfangswerten, wobei das ursprüngliche numerische Maß s die vorgegebene Konstante ist, wenn die erste Zeitreihe von Anfangswerten mit der zweiten Zeitreihe von Anfangswerten übereinstimmt, und anderenfalls von der vorgegebenen Konstante abweicht.

7. Das Verfahren nach Anspruch 6, das eine oder mehrere Wiederholungen von Folgendem umfasst:

Bestimmen eines Abstands d zwischen der ersten Zeitreihe von Anfangswerten und der zweiten Zeitreihe von Anfangswerten,

Neuskalieren des bestimmten Abstands d zwischen der ersten Zeitreihe von Anfangswerten und der zweiten Zeitreihe von Anfangswerten und

Addieren des neu skalierten Abstands zwischen der ersten Zeitreihe von Anfangswerten und der zweiten Zeitreihe von Anfangswerten zu oder Subtrahieren des neu skalierten Abstands zwischen der ersten Zeitreihe von Anfangswerten und der zweiten Zeitreihe von Anfangswerten von dem ursprünglichen numerischen Maß s.

8. Das Verfahren nach Anspruch 7, das eine oder mehrere Wiederholungen von Folgendem umfasst:

Anwenden des Filters mit gleitendem Fenster auf die erste Zeitreihe von Anfangswerten zwecks Erhaltens eines ersten gefilterten Anfangswerts,

Anwenden des Filters mit gleitendem Fenster auf die zweite Zeitreihe von Anfangswerten zwecks Erhaltens eines zweiten gefilterten Anfangswerts,

Bestimmen eines Abstands d zwischen dem ersten gefilterten Anfangswert und dem zweiten gefilterten Anfangswert,

Neuskalieren des bestimmten Abstands d zwischen dem ersten gefilterten Anfangswert und dem zweiten gefilterten Anfangswert und

Addieren des neu skalierten Abstands zwischen dem ersten gefilterten Anfangswert und dem zweiten gefilterten Anfangswert zu oder Subtrahieren des neu skalierten Abstands zwischen dem ersten gefilterten Anfangswert und dem zweiten gefilterten Anfangswert von dem ursprünglichen numerischen Maß s.

9. Das Verfahren nach Anspruch 7 oder 8, wobei jede Wiederholung folgende Schritte umfasst:

Vergleichen des bestimmten Abstands d mit dem Abstandsgrenzwert und,

wenn der bestimmte Abstand d den Abstandsgrenzwert überschreitet:

Benutzen des ersten Multiplikationsfaktors c1 zum Neuskalieren des bestimmten Abstands d,

anderenfalls:

Benutzen des zweiten Multiplikationsfaktors c2 zum Neuskalieren des bestimmten Abstands d.

10. Das Verfahren nach einem der Ansprüche 6 bis 9, das folgende Schritte umfasst:

Erzeugen von Anfangsdaten auf der Grundlage des ursprünglichen numerischen Maßes s und mindestens eines der folgenden Elemente:

- des mindestens einen ersten Aktors (3a - 3h, 4a - 4e),
- des ersten Sensors (5a - 5h),
- des zweiten Sensors (5a - 5h),
- einer ursprünglichen Abweichung des ursprünglichen numerischen Maßes s von der vorgegebenen Konstante, Weiterleiten der Anfangsdaten zum Benutzer und/oder der Bedienperson,

nach dem Weiterleiten der Anfangsdaten Empfangen eines Auswahlsignals, das eine Zustimmung oder eine Ablehnung des Benutzers und/oder der Bedienperson angibt, vom Benutzer und/oder von der Bedienperson, Erzeugen eines binären Auswahlwerts, der die Zustimmung oder die Ablehnung angibt, aus dem Auswahlsignal, und wenn die binäre Auswahl eine Zustimmung ist: Hinzufügen des ursprünglichen Betriebsmodus und/oder des ursprünglichen Betriebszustands zur ersten Liste.

**11.** Das Verfahren nach Anspruch 10, das folgenden Schritt umfasst: Bestimmen des Testgrenzwerts in Abhängigkeit von den Anfangsdaten.

**12.** Das Verfahren nach einem der Ansprüche 6 bis 11, das folgende Schritte umfasst:

Bestimmen eines Maßes für die Änderung der ersten Zeitreihe von Anfangswerten und wenn das Maß für die Änderung einen Änderungsgrenzwert überschreitet: Weiterleiten der Anfangsdaten zum Benutzer und/oder zur Bedienperson.

**13.** Das Verfahren nach einem der Ansprüche 6 bis 12, das folgende Schritte umfasst:

Bestimmen einer oder der ursprünglichen Abweichung des ursprünglichen numerischen Maßes s von der vorgegebenen Konstante und Vergleichen der ursprünglichen Abweichung mit einem ursprünglichen Grenzwert und wenn die ursprüngliche Abweichung unter dem ursprünglichen Grenzwert liegt: Hinzufügen des ursprünglichen Betriebsmodus und/oder des ursprünglichen Betriebszustands zur ersten Liste.

**14.** Computerprogramm, das für eine oder mehrere Systemautomatisierungen (6a, 6b), die zur Kommunikation mit einem Datennetzwerk verbunden sind, Anweisungen umfasst, die Schritte eines der Verfahren nach einem der Ansprüche 1 bis 13 auszuführen.

**15.** Computerlesbares Medium, auf dem das Computerprogramm nach Anspruch 14 gespeichert ist.

**Revendications**

**1.** Méthode de détection de défauts dans une structure (1) comportant un réseau de données et au moins un premier actionneur (3a - 3h, 4a - 4e) connecté au réseau de données et comportant de premiers et de seconds capteurs (5a - 5h), chaque capteur (5a - 5h) se connectant au réseau de données, la méthode comprenant les étapes consistant à :

obtenir via le réseau de données depuis l'au moins un premier actionneur (3a - 3h, 4a - 4e) un ou plusieurs signaux indicatif(s) d'un mode opératoire de test et/ou d'un état opératoire de test et depuis chacun des premiers et seconds capteurs (5a - 5h) un ou plusieurs signaux indicatif(s) d'une série chronologique de valeurs de mesure de test ; produire un mode opératoire de test et/ou un état opératoire de test de l'un ou plusieurs signaux indicatif(s) d'un mode opératoire de test et/ou d'un état opératoire de test et une première série chronologique de valeurs de tests de l'un ou plusieurs signaux obtenu(s) du premier capteur (5a - 5h) et une seconde série chronologique de valeurs de test de l'un ou plusieurs signaux obtenu(s) du second capteur (5a - 5h) ; chercher le mode opératoire de test et/ou l'état opératoire de test dans une première liste, et chercher le premier et le second capteurs (5a - 5h) dans une seconde liste ; si le mode opératoire de test se trouve dans la première liste et si le premier et le second capteurs (5a - 5h) se trouvent dans une seconde liste :

déterminer une mesure numérique de test s entre la première série chronologique de valeurs de test et la seconde série chronologique de valeurs de test, la mesure numérique de test s étant une constante prédéfinie quand la première série chronologique de valeurs de test correspond à la seconde série chronologique de valeurs de test, sinon déviant de la constante prédéterminée ; déterminer une déviation de test de la mesure numérique de test s par rapport à la constante prédéfinie ;

si la déviation de test dépasse une valeur seuil de test :

produire des données de défaut à partir de la déviation de test ; et utiliser les données de défaut pour alerter un utilisateur et/ou un opérateur.

**2.** La méthode selon la revendication 1, la méthode comprenant une ou plusieurs itération(s) de :

déterminer une distance d entre la première série chronologique de valeurs de test et la seconde série chronologique de valeurs de test ; redimensionner la distance déterminée d entre la première série chronologique de valeurs de test et la seconde série chronologique de valeurs de test ; et ajouter la distance redimensionnée entre la première série chronologique de valeurs de test et la seconde série chronologique de valeurs de test à ou soustraire la distance redimensionnée entre la première série chronologique de valeurs de test et la seconde série chronologique de valeurs de test de la mesure numérique de test $s$.

**3.** La méthode selon la revendication 2, la méthode comprenant une ou plusieurs itération(s) de :

appliquer un filtre à fenêtre glissante à la première série chronologique de valeurs de test pour obtenir une première valeur de test filtrée ; appliquer le filtre à fenêtre glissante à la seconde série chronologique de valeurs de test pour obtenir une seconde valeur de test filtrée ; déterminer une distance d entre la première valeur de test filtrée et la seconde valeur de test filtrée ; redimensionner la distance déterminée d entre la première valeur de test filtrée et la seconde valeur de test filtrée ; et ajouter la distance redimensionnée à ou soustraire la distance redimensionnée de la mesure numérique de test $s$.

**4.** La méthode selon la revendication 2 ou la revendication 3, chaque itération comprenant les étapes consistant à :

comparer la distance déterminée $d$ à une valeur de seuil de distance ; et si la distance déterminée $d$ est supérieure à la valeur de seuil de distance :

utiliser un premier facteur multiplicatif $c_1$ pour redimensionner la distance déterminée $d$ ;

sinon :

utiliser un second facteur multiplicatif $c_2$ pour redimensionner la distance déterminée $d$ ; où le premier facteur multiplicateur $c_1$ est différent du second facteur multiplicatif $c_2$.

**5.** La méthode selon l'une quelconque des revendications 1 à 4, la méthode comprenant l'étape consistant à : si la déviation de test dépasse la valeur seuil de test : produire les données de défaut à partir de la déviation de test et à partir d'au moins un parmi :

- l'au moins un premier actionneur (3a - 3h, 4a - 4e),
- le premier capteur (5a - 5h),
- le second capteur (5a - 5h),
- la mesure numérique de test s.

**6.** La méthode selon l'une quelconque des revendications 1 à 5, la méthode comprenant les étapes consistant à :

obtenir via le réseau de données depuis l'au moins un premier actionneur (3a - 3h, 4a - 4e) un ou plusieurs signaux indicatif(s) d'un mode opératoire initial et/ou d'un état opératoire initial et depuis chacun des premiers et seconds capteurs (5a - 5h) un ou plusieurs signaux indicatif(s) d'une série chronologique de valeurs de mesure d'initialisation ; produire un mode opératoire initial et/ou un état opératoire initial à partir de l'un ou plusieurs signaux indicatif(s) d'un mode opératoire initial et/ou d'un état opératoire initial et une première série chronologique de valeurs d'initialisation à partir de l'un ou plusieurs signaux indicatif(s) d'une série chronologique de valeurs d'initialisation obtenues du premier capteur (5a - 5h) et une seconde série chronologique de valeurs d'initialisation à partir de l'un ou plusieurs signaux indicatif(s) d'une série chronologique de valeurs d'initialisation obtenues du second capteur (5a - 5h) ; et déterminer une mesure numérique initiale $s$ entre la première série chronologique de valeurs d'initialisation et la seconde série chronologique de valeurs d'initiation, la mesure numérique initiale $s$ étant la constante prédéfinie quand la première série chronologique de valeurs d'initialisation correspond à la seconde série chronologique de valeurs d'initialisation, sinon déviant de la constante prédéterminée.

**7.** La méthode selon la revendication 6, la méthode comprenant une ou plusieurs itération(s) de :

déterminer une distance *d* entre la première série chronologique de valeurs d'initialisation et la seconde série chronologique de valeurs d'initialisation ;

redimensionner la distance déterminée *d* entre la première série chronologique de valeurs d'initialisation et la seconde série chronologique de valeurs d'initialisation ; et

ajouter la distance redimensionnée entre la première série chronologique de valeurs d'initialisation et la seconde série chronologique de valeurs d'initialisation à ou soustraire la distance redimensionnée entre la première série chronologique de valeurs d'initialisation et la seconde série chronologique de valeurs d'initialisation de la mesure numérique initiale *s*.

8. La méthode selon la revendication 7, la méthode comprenant une ou plusieurs itération(s) de :

appliquer le filtre à fenêtre glissante à la première série chronologique de valeurs d'initialisation pour obtenir une première valeur d'initialisation filtrée ;

appliquer le filtre à fenêtre glissante à la seconde série chronologique de valeurs d'initialisation pour obtenir une seconde valeur d'initialisation filtrée ;

déterminer une distance *d* entre la première valeur d'initialisation filtrée et la seconde valeur d'initialisation filtrée ;

redimensionner la distance déterminée *d* entre la première valeur d'initialisation filtrée et la seconde valeur d'initialisation filtrée ; et

ajouter la distance redimensionnée entre la première valeur d'initialisation filtrée et la seconde valeur d'initialisation filtrée à ou soustraire la distance redimensionnée entre la première valeur d'initialisation filtrée et la seconde valeur d'initialisation filtrée de la mesure numérique initiale *s*.

9. La méthode selon la revendication 7 ou la revendication 8, chaque itération comprenant les étapes consistant à :

comparer la distance déterminée *d* à la valeur de seuil de distance ; et

si la distance déterminée *d* est supérieure à la valeur de seuil de distance :

utiliser le premier facteur multiplicatif $c_1$ pour redimensionner la distance déterminée *d* ;

sinon :

utiliser le second facteur multiplicatif $c_2$ pour

redimensionner la distance déterminée d.

10. La méthode selon l'une quelconque des revendications 6 à 9, la méthode comprenant les étapes consistant à :

produire des données d'initialisation à partir de la mesure numérique initiale *s* et à partir d'au moins un parmi :

- l'au moins un premier actionneur (3a - 3h, 4a - 4e),
- le premier capteur (5a - 5h),
- le second capteur (5a - 5h),
- une déviation initiale de la mesure numérique initiale *s* par rapport à la constante prédéfinie ;

transmettre les données d'initialisation à l'utilisateur et/ou à l'opérateur ;

après transmission des données d'initialisation, recevoir de l'utilisateur et/ou de l'opérateur un signal de sélection indicatif d'un choix affirmatif ou négatif fait par l'utilisateur et/ou par l'opérateur ;

produire une valeur de sélection binaire indicative du choix affirmatif ou du choix négatif à partir du signal de sélection ; et

si la valeur de sélection binaire est affirmative : ajouter le mode opératoire initial et/ou l'état opératoire initial à la première liste.

11. La méthode selon la revendication 10, la méthode comprenant l'étape consistant à :

déterminer la valeur seuil de test en fonction des données d'initiation.

12. La méthode selon l'une quelconque des revendications 6 à 11, la méthode comprenant les étapes consistant à :

déterminer une mesure de changement de la première série chronologique de valeurs d'initialisation ; et

si la mesure de changement dépasse une valeur seuil de changement :

transmettre les données d'initialisation à l'utilisateur et/ou à l'opérateur.

13. La méthode selon l'une quelconque des revendications 6 à 12, la méthode comprenant les étapes consistant à :

déterminer une ou la déviation initiale de la mesure numérique initiale s par rapport à la constante prédéfinie et comparer la déviation initiale à une valeur seuil initiale ; et

si la déviation initiale est inférieure à la valeur seuil initiale :

ajouter le mode opératoire initial et/ou l'état opératoire initial à la première liste.

**14.** Programme informatique comprenant des instructions à un ou plusieurs contrôleur(s) de système (6a, 6b) en connexion communicative avec un réseau de données pour exécuter les étapes de l'une des méthodes selon les revendications 1 à 13.

**15.** Support de données lisible par ordinateur ayant enregistré dessus le programme informatique selon la revendication 14.

FIG 1

FIG 2

FIG 3

FIG 4

FIG 5

FIG 6

FIG 7

**REFERENCES CITED IN THE DESCRIPTION**

**Patent documents cited in the description**

- EP 3156858 A1
- EP 3156858 B1
- US 2017017222 A1
- US 201204663A1 A, EK STEVEN W and by TALLARIDA STEVEN J
- US 201204663 A1
- EP 3186657 A1
- EP 3186657 B1
- US 2022019249 A1
- CN 109240080 B